# EUROPEAN PATENT SPECIFICATION

(11) **EP 1 284 604 B1**
(45) Date of publication and mention of the grant of the patent: **27.07.2005**
(21) Application number: 01931465.7
(22) Date of filing: 10.05.2001
(51) Int. Cl.: A22C 25/16, A23L 1/325

(54) **IMPROVED METHOD FOR THE MANUFACTURE OF RAW FISH PRODUCTS**
VERFAHREN ZUR HERSTELLUNG VON ROHEN FISH PRODUKTEN
PROCEDE AMELIORE DE PRODUCTION DE PRODUITS A BASE DE POISSON CRU

(30) Priority: 10.05.2000 DK 200000777; 10.05.2000 US 202964 P
(43) Date of publication of application: 26.02.2003
(73) Proprietor: Kald Fish AS, 5430 Bremnes (NO)
(72) Inventor: SKJERVOLD, Per, Olav, N-1430 Aes (NO); FJAERA, Svein, Olav, N-6600 Sunndals ra (NO); MORLANDSTOE Jan, Ove, N-5427 Urangsvaeg (NO); SVENDSEN, Olav, N-5430 Bremnes (NO)
(74) Representative: Plougmann & Vingtoft A/S
(86) International application number: PCT/DK2001/000329
(87) International publication number: WO 2001/084941

(56) References cited:
- EP-A- 0 711 502
- EP-A- 0 716 815
- WO-A-95/16364
- DE-A- 3 632 561
- DE-B- 1 579 426
- GB-A- 1 461 992
- US-A- 2 857 621
- US-A- 3 319 287
- US-A- 3 570 048
- US-A- 3 902 222
- US-A- 4 008 509

## Description

### FIELD OF INVENTION

The present invention relates in its broadest aspects to the provision of boned, filleted raw fish products. Particularly, there is provided a method of preparing such products wherein pin-bones are removed from the fish meat before resolution of rigor. Additionally, there is provided a method for producing composite fish meat products based on such boned products.

### TECHNICAL BACKGROUND AND PRIOR ART

Following catch the flesh of fish are subject to the process generally referred to as rigor which implies that muscular elasticity disappears due to the formation of irreversible cross-binding between myosin filaments and actin filaments caused by the exhaustion of ATP in the muscle cell. Prior to onset of rigor, the recently slaughtered fish will be in a pre-rigor state where the fish is still sensorial subtle and with soft and resilient muscles. This pre-rigor state is followed by the onset of rigor wherein the fish is still of a subtle sensorial quality, but where the muscles gradually becomes stiffer. The point in time for onset of rigor and the development hereof are i.a. dependent on the fish species, the pre-catch temperature in the fish and the handling of the fish before catch, the level of stress imposed on the fish during catch, the biological status of the fish and the temperature during pre-rigor storage. For the Atlantic salmon, full rigor is reported to occur 6-24 hours post mortem (Skjervold et al., 1999). Many researchers have reported that improvements in post-catch fish muscle quality by a delay in onset of rigor is associated with "low stress" or rapid killing methods (Jerrett et al., 1996). It is generally accepted that onset of rigor is accelerated in fish due to exhaustion prior to death (Korhonen et al., 1990).

The pre-catch temperature in the fish will affect both shelf-life and organoleptic qualities of the fish (Whittle, 1996). Accordingly, slaughtering procedures and technologies have been developed and implemented which aims at controlling the temperature at catch, including a live-chilling process (Skjervold et al., 1996). By transferring live fish to a chilling tank 30 to 60 minutes prior to catch, a lower temperature is obtained in the fish prior to slaughter and it has been reported that onset and resolution of rigor are delayed (Skjervold et al., 1999).

Typically, the rigor process has a duration of 3-5 days after which the state of rigor is resolved and the fish enters a post-rigor state. One important implication of resolution of rigor is a gradual degradation of collagen in the connective tissue embedded in the muscles. Accordingly, the rigor process has a significant impact on the firmness whereby so-called pin-bones are bonded in the connective tissue. Before and during the rigor process, these small bones are firmly bonded and therefore difficult to remove during filleting, but following resolution of rigor they can be removed more easily.

The natural rigor process has a significant impact on the freshness of the raw fish and on the appearance and the structure of the fish muscles. Freshness is an important quality parameter of raw fish, which adds to the market value of these products. Freshness factors and other important quality parameters in raw fish include the level of microbial growth, odour, texture, gaping and water loss. The availability of high quality raw fish products in the market relies largely on early processing. Currently, the common practice in the fish industry is that the fish is bled, gutted and iced immediately after catch, i.e. at the pre-rigor state, to avoid bruising or gaping of the fish, which generally occur if the fish is handled at the rigor state. The fish is then directly offered for sale or alternatively, stored until resolution of rigor, usually 3-5 days after slaughter, following which the fish can be subjected to further processing such as filleting.

According to current practice, processing of raw fish such as filleting and boning, is typically performed at the post-rigor stage and it involves several steps including removal of heads and tails, removing scales, separating the fish fillets from the backbone, and washing and packaging the separated fillets. A significant problem facing the fish filleting industry is the presence in the fillets of the thin and fine fish bones, which are commonly referred to as pin-bones. These bones are all that remains of the fish skeleton after filleting. The presence of pin-bones in the fish fillet is unwanted by consumers as pin-bones that are not removed prior to eating may be swallowed and thereby result in several discomfort experiences.

Under current practice, pin-bones are removed post-rigor where breakdown of the collagen has occurred. Several methods have been disclosed for removal of pin-bones at the post-rigor state. Most methods describe suitable tools comprising e.g. gripping jaws (US 4,945,607) or rotating cylinders (WO 92/12641), all designed for gripping, pulling, nipping or snagging pin-bones from the fish. Furthermore, some methods describe an apparatus (DE 1 579 426) and a method of removing pin-bones while the fish are in a state of rigor (US 5,911,621), there are however no descriptions of the importance of controlling the rigor state in order to obtain a high quality product.

The fact that processing of raw fish is carried out at the post-rigor state has the disadvantageous implication that processed raw fish products cannot be provided to the consumer until at the earliest 4-10 days after catch of the fish which generally results in an inferior textural and sensorial quality of such products as compared to that of freshly caught fish.

There is an increasing consumer demand for raw fish meat products of a high quality i.e. with improved textural and organoleptic quality and substantially without pin-bones. In Japan, high quality raw fish products, generally referred to as "ikarimi quality" products, are highly demanded. Japanese "sushi" fish is one example of such high quality products. Additionally, it is to be expected that there is a market in other countries for such high quality fish meat products. Further, this general demand of convenient and high quality products has driven the meat industry to develop specific portions e.g. chicken breast and thighs or loins that are marketed as high value products. This practise has added substantial to the products value. The above trend has also developed in the fish industry and accordingly fish portions i.e. steaks are provided. However, other processed boneless fish portions with an added value are of great interest in the fish industry.

There is also a considerable consumer demand for raw fish meat products which are provided as boned composite products i.e. products which are composed of several boned fish meat parts combined using a bonding agent and optionally being in a predetermined shape. Composite raw fish meat products may comprise fish meat parts of the same or different species of fish and optionally comprising other ingredients such as e.g. spices, vegetables, meat from non-fish species, etc. EP 0 716 815, WO 96/31131 and WO 95/16364 disclose methods for preparing composite fish meat product from raw fish parts being at the post-rigor state, i.e. such known composite products are based on the use of raw materials that are up till 10 days 010, counted from post-catch. The implication hereof is that such products are made from raw materials which are not of an optimum sensory and textural quality.

The present invention provides a method that in a simple manner overcomes the above freshness problems associated with the current use of post-rigor raw fish materials for producing processed raw fish products including composite fish product. The invention is based on the finding that it is possible, also on an industrial scale, to separate fish fillets from fish prior to its entering the post-rigor state and also to remove pin-bones from boned fish meat parts before resolution of rigor. This improved novel process provides the means of making raw fish meat products of a very high sensorial and textural quality and having highly improved freshness factors such as low bacteriological counts relative to conventional raw fish products made from stored fish at the post-rigor state. One surprising finding, when using such a process was that low bacterial counts were found in these new products as compared to those of conventionally produced fish meat products made from post-rigor fish starting materials. Furthermore, special regional cuts of the new products can be used to develop products with different quality properties as compared to conventional products and thus potential adding of value to these new products.

### SUMMARY OF THE INVENTION

Accordingly, in a first aspect the invention pertains to a method for preparing raw fish meat products by a method comprising the steps of i) providing a fish, ii) at least partially separating fish meat parts from the main skeletal parts of the fish and iii) substantially removing the pin-bones from the fish meat parts before resolution of rigor to obtain the raw fish meat product.

In a further aspect there is provided a raw fish meat product obtainable by the above method comprising boned fish meat wherein pin-bones have been substantially removed before resolution of rigor.

In yet a further aspect the invention provides a method of combining raw fish meat parts comprising i) providing a fish, ii) at least partially separating fish meat parts from the main skeletal parts of said fish, iii) substantially removing pin-bones from said raw fish meat parts before resolution of rigor and iv) combining the raw fish meat parts by a bonding agent to obtain a composite raw fish meat product.

There is also provided a raw composite fish meat product as obtainable by the above method comprising boned fish meat parts wherein pin-bones have been substantially removed before resolution of rigor and, said fish parts are combined with a bonding agent to obtain the raw composite fish meat product.

In yet other aspects the invention provides processed fish meat product obtained by processing a product according the raw fish meat product or the raw composite fish meat product as describes above.

### DETAILED DISCLOSURE OF THE INVENTION

As mentioned above, it is a primary objective of the present invention to provide a method for preparing a raw fish meat product which is substantially freed from pin-bones, which has improved freshness characteristics as compared to prior art products including reduced bacteriological development and gaping, and improved sensorial and textural properties.

Thus, as will be illustrated by the following examples, it was found by the present inventors, contrary to what was expected that a decreased baderial growth in fish meat was found when fish were processed before resolution of rigor, as compared to fish meat which had been processed post-rigor. It was expected that the early filleting (pre-rigor and in-rigor) would result in an increase in bacterial growth due to early exposure of the fish meat to the surrounding environment by filleting. However, the methods, as illustrated, resulted in a high quality product with improved freshness characteristics as compared to the conventional post-rigor product. Furthermore, the inventors showed that several quality parameters could be used to differentiate between fish meat from different locations on the fish when fish meat were processed before resolution of rigor.

As used herein The term "raw fish meat product" refers to a processed fish meat product of a quality, which is improved as compared to conventional post-rigor processed fish meat products. In Japan high quality fish meat products are referred to as of "Ikarimi quality" indicating a hard texture product, i.e. an excellent quality in respect of textural and sensorial properties.

As used in the present context the term "processed fish meat" refers to any processing of the raw fish meat resulting in the products as disclosed in the present invention and include, but are not limited to, processes such as skinning, boning, filleting and removal of pin-bones. It is contemplated that the term also includes any further processing of the raw fish product of the invention. Such further processing may include cooking, salting etc as described hereinafter.

The method according to the invention comprises the steps of "providing a fish". As used herein the term "providing a fish" refers to any suitable means for obtaining a fish including fishing, netting, catching and harvesting fish from fish plants. It should also be understood that in the present context the above terms may include slaughtering of the fish, such as by actively killing the fish optionally after anaesthesia of the fish or by a passive type of killing where the fish is catched and eventually dies due to exhaustion.

It is appreciated that the provided fish can be any suitable fish belonging to the group consisting of a salt-water fish, a brackish-water fish and a fresh-water fish. The group of salt water fish may include fish belonging to the genus *Salmonidae*, including *Salmo salar*.

The period of time from slaughter until the onset of rigor may be extended by keeping the provided fish under conditions that delay the onset of rigor. Such conditions may include keeping the fish at a decreased temperature before slaughter, such as below about 10°C, more preferably below about 5°C, including 4°C, 3°C, 2°C and 1°C. Furthermore, the fish may advantageously be held under conditions which does not provoke any stress response in the fish, as such stress condition may results in a decreased quality of the fish meat after slaughter. Stress conditions may include physiologically-, physically and mechanically stress.

According to the invention, the fish meat parts may be at least partially separated from the main skeletal parts before removal of the pin-bones. Such partially separated fish parts can be obtained by conventional boning or filleting whereby the fish is separated from the backbone resulting in two fillets. It is also contemplated that other suitable methods for removal of the main skeletal parts from the fish, e.g. excising resulting in fish loins, can be applied. Irrespective of the method, it is preferred that the separated fish meat parts by the separation process expose the pin-bones in a way that allows for a subsequent removal. The boning, including removal of skeletal parts and pin-bones, may be performed after complete or partial skinning or without skinning. Additionally, boning, including removal of pin-bones, may be performed on whole fish i.e. without previous filleting. It follows that the term "boning" may include the process of removing the main skeletal parts as describes above, however, the expression may also be used to characterised the product of the invention wherein substantially all bones (including pin-bones) have been removed. It is further contemplated that the terms "de-boning" and "de-skinning" may be used synonymous with the terms boning and skinning e.g. in the fish industry.

In accordance with the invention, pin-bones are substantially removed from the fish meat parts before resolution of rigor". In the present context, the term "substantially removed" is to be understood as the removal of an amount of pin-bones whereby a consumer friendly product is obtained which does not result in any discomfort experience, due to the presence of pin-bones, while eating the product. In preferred embodiments the pin-bones are completely removed.

The pin-bones and/or the meat areas containing the pin-bones which are to be removed, may advantageously be detected by direct and/or indirect methods. The direct methods include mechanical methods detecting the position of the pin-bones in the fish. The indirect methods may include image analysis, fluorescence techniques, Near infrared spectroscopy (NIR) and Infrared spectroscopy (IR). Subsequent data analysis to be used may include any suitable statistic data treatment allowing a correlation of the direct and/or indirect data with the position of pin-bones in the fish. The methods as described may be based on morphological information of the fish species to be boned.

According to the invention, pin-bones are removed from the fish meat parts before resolution of rigor. The onset of rigor occurs when the ATP-content of the muscle drops below a critical point and the rigor process comprises several states including 1) in-rigor, where less to more than half of the body is evidently stiff, 2) full-rigor where the fish is completely stiff, and do not show any sign of bending, 3) resolution of rigor wherein the fish gradually becomes more bendable at first in the tail and neck part and 4) post-rigor where the fish is limp due to other degrading processes in the fish meat (Berg et al. 1997).

Conventionally, pin-bones in fish are removed after resolution of rigor as described above. In the method of the present invention, pin-bones are removed before the resolution of rigor. The pin-bones may be removed by applying several methods including cutting the fillet longitudinal, i.e. making to separate loins substantially without pin-bones. This cut may be part of the fillet, i.e. not a complete disjunction. Additionally, pin-bones may be removed by a V-shaped cut, by cutting (carving) out each pin-bone separately, and by "shooting" out bones by pistol, water-jet or air. In one specific embodiment, slices of meat comprising the pin-bones are excised from the fish meat parts in order to obtain the boneless raw fish meat product.

In another embodiment, pin-bones may be removed by cutting the fish meat close to the pin-bones. Hereby, at least one fillet or loin substantially free from pin-bones and at least one fillet or loin substantially containing the pin-bones are provided. Preferably, the separation process results in at least one fillet or loin exposing the pin-bones in a line close to the rind of the raw fish part so that the pin-bones can be separated from the fish part by conventional methods e.g. dragging or pulling the row of pin-bones from the fish meat and thereby only removing a minimum of fish meat with the pin-bones.

It is contemplated that the processes of removing pin-bones from the raw fish pre-rigor can be performed manually or automatically on an industrial scale.

As mentioned above, it is an essential feature of the present invention that pin-bones are removed from the partially separated fish meat parts before resolution of rigor. Preferably, the pin-bones are removed from the raw fish meat parts before full rigor, such as before in-rigor. In one useful embodiment the pin-bones are removed from the raw fish meat parts pre-rigor.

The rigor process is normally defined as the condition starting when the energy reserves in the fish muscles are depleted, and includes several states as defined hereinbefore. The onset of rigor normally occurs a few hours after slaughter. The actomyocin complex, containing myofibrillar proteins, actin and myosin, lose its extendibility, and the muscles become stiff. This condition is commonly referred to as full-rigor. The time a fish requires to enter the full-rigor state is highly dependent on the species, the body temperature and the amount of stress the animal experiences before slaughter. Psychological or physical stress experienced by the animals produces biochemical changes in the muscles, which may adversely affect the quality of the fish meat. Eventually, the stiffness in the muscle tissues begins to decrease owing to the enzymatic breakdown of structural proteins, i.e. the collagen that hold muscle fibres together. This phenomenon is known as resolution of rigor and can continue for weeks after slaughter.

Both the pre-slaughter handling of the live animals and the post-slaughter handling may affect fish meat quality. Post mortem muscles are susceptible to adverse biochemical reactions in response to certain external factors such as e.g. temperature.

In the present context, the term "resolution of rigor" is to be understood as the condition where the connective tissue is at least partially loosened from the fish-bones whereby the bones can easily be removed by pulling, dragging or even by "shooting" out bones using a water-jet pistol. As mentioned above, conventional boneless raw fish meat products are obtained after resolution of rigor. Thus, it is an essential feature of the method of the present invention that the raw fish meat parts are obtained before this resolution of rigor has taken place and accordingly, the pin-bones are removed before loosening of the fish bones.

In one useful embodiment, the pin-bones are removed from the raw fish meat parts within about 50 hours post mortem including within 40 hours post mortem, including within 30 hours, 25 hours, 20 hours, 15 hours, 10 hours, 7 hours, 5 hours, 3 hours, 2 hours, 1 hour, 0.5 hour or even immediately after slaughtering of the fish.

In a further aspect of the present invention, there is provided a raw fish meat product comprising boned fish meat parts wherein the pin-bones have been substantially removed before resolution of rigor. Such a product may be obtained by the method according to the invention, whereby a substantially boneless product including i.a. fillets and loins with or substantially without skin can be obtained. The product according to the invention can be in a fresh or frozen state and optionally prepared as a "ready to eat" meal. Products prepared according to the above method can be characterised as a high quality raw fish meat product and hence be referred to as "ikarimi quality" products. Such product may be of special interest in the production of Japanese sushi dishes.

According to the invention and as illustrated in the following examples it is possible to select pre-rigor raw fish meat parts from different locations on the fish and thereby provide high value products e.g. comprising lower and caudal loins from pre-rigor fillets.

The raw fish product as described may e.g. be preserved by any suitable preservation method known in the art including smoking, salting, brining, canning, cooking and freezing and any combination thereof.

In an interesting aspect, the invention provides a method of combining the above described raw fish meat products with a bonding agent to obtain a pre-rigor raw composite fish meat product.

As used herein the term "composite raw fish meat product" refers to a product partly build up by combining at least partially separated fish meat parts in order to obtain a raw composite fish meat product. Such partially separated raw fish meat parts may include damaged fish, minced fish meat, small pieces of fish meat, fish filets, fish loins or any other part of a fish. The raw fish meat parts to become bonded may by derived from two or more different fish species.

In a further embodiment of the present invention the raw fish meat parts to become bonded may include any suitable raw fish meat part including fillets or loins. Further, it is contemplated that preserved fish meat parts may be applied such as e.g. smoked and/or salted fish meat parts.

This combining of the fish meat products are preferably carried out by applying a bonding agent to the raw fish meat parts and keeping the parts under a condition which allows for the bonding of the meat parts to take place. This may be carried out by any suitable means such as those described in the prior art. Accordingly, the combining of the fish parts may include mixing of the fish parts with a bonding agent, adding the bonding agent to the surfaces of the fish part material that are to become bonded or injecting the bonding agent into the fish meat.

The fish meat parts to be combined are preferably bonded within a period of time which at the most does not exceed 50 hours post mortem. More preferably, the bonding of the fish parts is performed within 40 hours post mortem, including within 30 hours, 25 hours, 20 hours, 15 hours, 10 hours, 7 hours, 5 hours, 3 hours, 2 hours, 1 hour, 0.5 hour or even immediately post mortem.

In a still further embodiment of the present invention, the fish parts to be combined are bonded with a bonding agent derived from a natural source. Such natural sources may include microbial animal and/or vegetable material, combined in such a way that it is capable of binding the fish meat parts when added. As used herein, the term "microbial material" include bacteria, yeast and fungi in any suitable composition. The term animal material include any material derived from mammals and marine animal species, such as fish. Vegetable materials include parts or extracts of cultivated or wild plants as well as intact plants.

In accordance with the invention, the natural bonding agent can be derived from an animal species and may comprise blood coagulating proteins such as fibrinogen and a substance that can effect conversion of the fibrinogen into fibrin. Such substance may include thrombin. The clotting process is thus initiated by the enzyme thrombin, which catalyses the breakage of peptide bonds of fibrinogen. The peptide bonds form intermolecular and intramolecular cross-links, thus giving rise to a large clot, in which all molecules are linked to each other.

In a presently preferred embodiment, the amount of fibrinogen in the bonding agent is typically in the range of about 5-100 mg/ml, such as in the range of about 7-75 mg/ml, including the range of about 10-50 mg/ml, such as in the range of about 15-30 mg/ml. The amount of thrombin is typically in the range of about 10-500 units/ml, such as in the range of about 15-400 units/ml, including the range of about 20-300 units/ml such as in the range of about 30-200 units/ml including the range of about 40-100 units/ml. One unit is defined as the amount of thrombin which will catalyse the conversion of 1 µmol of fibrinogen in one minute. Preferably, the weight ratio between thrombin and fibrinogen in the bonding agent is about 1:30, including 1:25, 1:20, 1:15 and 1:10. In addition to the blood coagulating proteins the natural bonding agent may further comprise a fibrin stabilising factor such as transamidase, including Factor XIIIa and a transglutaminase optionally in the presence of calcium as a cofactor.

In one useful embodiment of the present invention, the bonding agent to be used for bonding of the composite fish meat product is derived from fish. The bonding agent derived from fish may include blood proteins obtained from any suitable fish including cultivated or natural captured fish. Blood from the fish may be obtained by conventional methods known in the art such as by the use of a vacuum system, and the blood proteins may be purified by means and methods known in the art.

However, it is also contemplated that the bonding agent may as a further component comprise a vegetable or an animal material such as e.g. minced meat from a marine animal species. The animal material may be fish derived from the group consisting of a salt-water fish, a brackish-water fish and a fresh-water fish.

In accordance with the invention the fish meat parts are preferably combined at a temperature within the range of about 0-60°C, and the bonding process is effected for a period of time which will allow the fish meat parts to become bonded. Preferably, the bonding process is effected for a period of time within the range of 1-12 hours.

The method of the present invention may further comprise the step of shaping the composite fish meat product into a predetermined shape e.g. by using a form. The fish parts can be filled into the form and allowed to become bonded in the predetermined shape. The advantage of shaping the composite fish product is the possibility of delivering a product of a high standard and quality to the consumers in a "ready to use" condition.

Additionally, the method of the present invention may include the step of applying other materials than fish to the composite fish meat product. Such other materials may include other marine animal species e.g. shrimps and animal material such as meat which is not derived from fish, parts of, plants e.g. grain and baked products, or whole plants, vegetables and spices.

In a further embodiment of the present method, the composite fish meat product may be preserved by any suitable method described in the art and as defined hereinbefore.

In a still further aspect of the present invention there is provided a raw composite fish meat product which comprises substantially boned fish meat wherein pin-bones have been removed before resolution of rigor which composite fish meat products are combined by a bonding agent. The product may be obtained according to any of the above listed methods and elicit any of the features listed above used for a characterisation of the raw fish meat product of the present invention.

In other aspects the invention provides processed fish meat product obtained by processing of product as defined above including the raw fish meat product and the raw composite fish meat product as described.

The invention is further illustrated in the following non-limiting examples and in the figures, where:
Fig. 1 and Fig. 2 illustrate the results from experiment 1. Total viable counts (TVS) stored in air (Fig. 1) or in vacuum (Fig. 2). Symbols: -◆- pre-rigor fillets, -■- in-rigor fillets, -▲- post-rigor fillets,
Fig. 3 and Fig. 4 show the results from experiment 2, total viable counts, stored in air (Fig. 3) or in vacuum (Fig. 4). Symbols: -◆- pre-rigor fillets, -■- in-rigor fillets, -▲- post-rigor fillets,
Fig. 5 and Fig. 6 show the results from experiment 2, the number of H₂S-producing bacteria, stored in air (Fig. 5) or in vacuum (Fig. 6). Symbols: -◆- pre-rigor fillets, -■- in-rigor fillets, -▲- post-rigor fillets,
Fig. 7 and Fig. 8 show the results from experiment 2, the number of psychrothropic bacteria, stored in air (Fig. 7) or in vacuum (Fig. 8). Symbols: -◆- pre-rigor fillets, -■- in-rigor fillets, -▲- post-rigor fillets, and
Fig. 9 and 10 illustrate the results from experiment 2, the sensory scores on odour, stored in air (Fig 9) or in vacuum (Fig 10). Symbols: -◆- pre-rigor fillets, -■- in-rigor fillets, -▲- post-rigor fillets.

### EXAMPLE 1

### PROCESS LINES FOR PRODUCTION OF FISH PRODUCTS

As illustrated in Table 1, the conventional post-rigor method for boning of fish is carried out after a storage period of 3-8 days. After that period pin-bones can easily be removed from the fish and thus, post-rigor raw fish meat products without bones are obtained.

As a contrast hereto, the method of the present invention is illustrated in Table 2 wherein the processing of the fish is performed before resolution of rigor. As can be seen from this figure, the time for processing may be reduced to about 3 hours. Filleting is performed by the conventional method, however, the pin-bones are removed manually or automatically by excising the meat parts of the fish containing the pin-bones whereby a pre-rigor fish meat product is obtained.

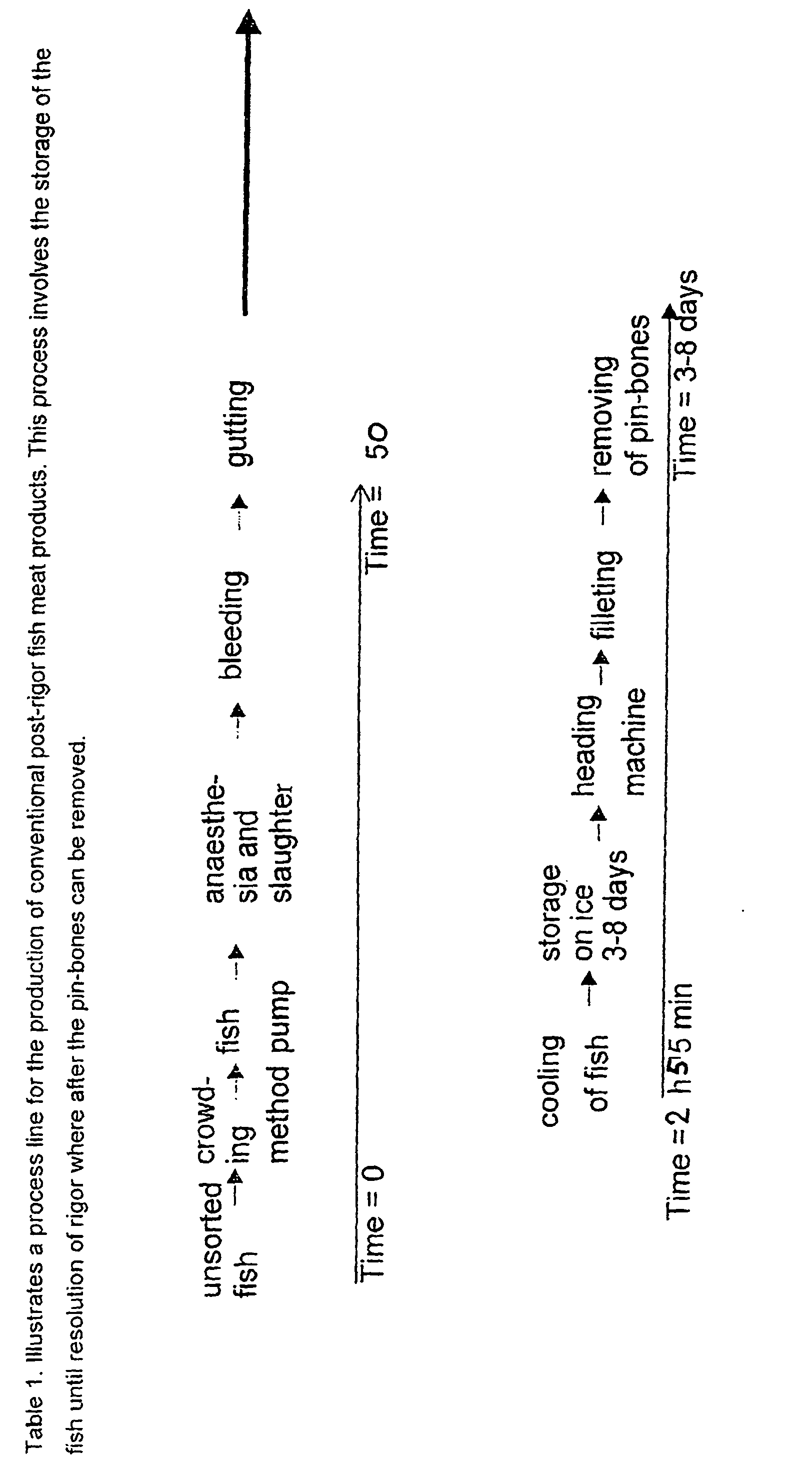

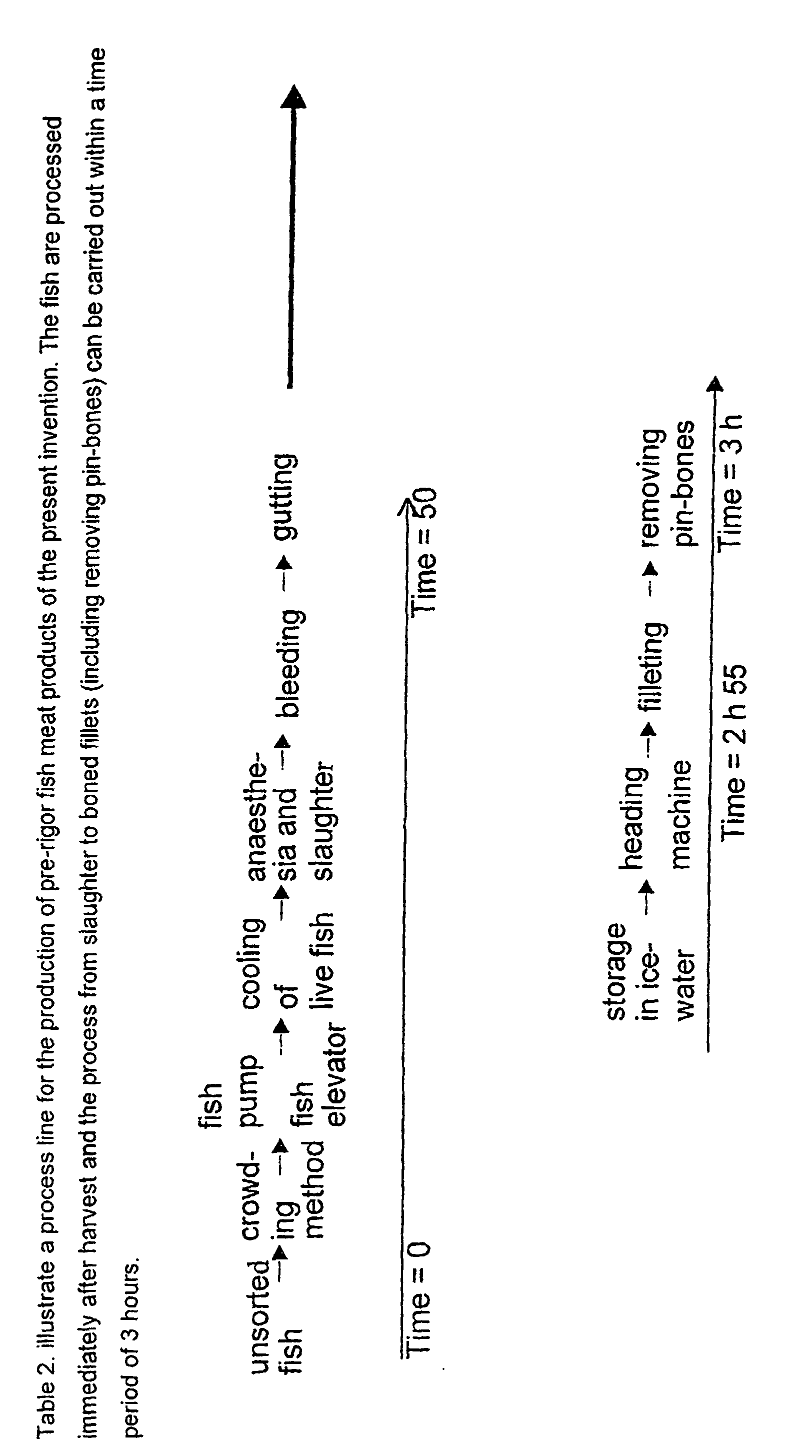

### EXAMPLE 2

### MICROBIAL QUAUTY OF CONVENTIONAL FISH PRODUCTS (POST-RIGOR) COMPARED TO IN-RIGOR AND PRE-RTGOR FILETS

The microbial quality of Atlantic salmon fillets processed pre-, in- and post rigor was analysed by filleting the salmon after different storage periods after slaughter, namely pre-rigor, in-rigor and post-rigor.

### Experimental conditions

Two individual experiments were carried out to study microbial growth and other freshness factors of the salmon fillets. In experiment 1 only total viable counts (TVC) were analysed. Experiment 2 was extended to include analysis of TVC and H₂S-producing bactetia, and the quality parameters odour, texture and gaping.

### Experiment 1:

Atlantic salmon (*Salmo salar*) with a mean weight of 3.7 kg were live-chilled from a seawater temperature of 8°C to a body temperature of approximately 1-2°C by keeping the fish for 45 minutes in a chilling tank with a temperature of 1°C prior to harvest. The temperature was kept low throughout early processing by chilling during anaesthesia using CO₂ and allowing the fish to bleed in a tank at 1.5°C for 60 minutes prior processing (Skjervold et al. 1996). The salmons were divided randomly into three groups and filleted pre-rigor (2 hours after harvesting), in-rigor (2 days after harvest) and post-rigor (5 days after harvest). Before filleting the gutted fish were stored on ice in EPS boxes.

After filleting, the fillets were cut vertical in 3 equally sized pieces which were randomly divided in two packaging groups. The pieces were individually vacuum packaged (vac.) and stored on ice, or the pieces were stored in air (air), skin to skin on ice. All the fillet pieces were kept in a refrigerated chamber at a temperature of 0-2°C. The temperature in the pieces varied between 0.0°C and + 0.5°C during a storage period of 14 days. The fillet pieces were analysed after different storage times, and for each sampling date 10 new vacuum packaged pieces and 10 new pieces stored in air were analysed.

### Experiment 2:

Atlantic salmon with a mean weight of 3.6 kg were live-chilled from a seawater temperature of 5.5°C to a body temperature of approximately 1-2°C, as described in experiment 1. A total of 84 whole salmon were either filleted pre-rigor, in-rigor or post-rigor and otherwise treated and stored as described in experiment 1.

In this experiment the fillets were used as whole fillets, and not cut into pieces. One group was packaged in vacuum and one group stored in air. For each sampling date, 4 new vacuum packaged fillets and 4 new fillets stored in air were analysed.

### Microbial quality

Samples of 25 g were taken from the middle of salmon pieces obtained as described in experiment 1 or between the dorsal fin and the anal fin on whole fillets obtained as described in experiment 2. The samples were homogenised in 250 ml of 0.9% NaCl (w/v) and 0.1% peptone (w/v) for 120 seconds in a Stomacher 400 Laboratory Blender (Seward). Total Viable Counts (TVC) were measured after a suitable dilution had been added to melted and temperated iron agar (Agar Lyngby, IA, Oxoid CM 867) supplemented with L-cystein, and stored at 20±°C for 3 days.
Black colonies were counted as H₂S-producing bacteria and TVC was calculated as the total of black and white colonies.

The content of psychrothrophic bacteria was determined by a spread plate count method using plate count agar (PCA) amended with 1% NaCl and incubated at 8°C for 5-7 days. In experiment 1 the averaged results of 10 fillets pieces, both vacuum and air, are presented and in experiment 2 averaged results of 4 fillets, both vacuum and air, are presented as log colony forming units (CFU)/g.

### Results

### Experiment 1, TVC.

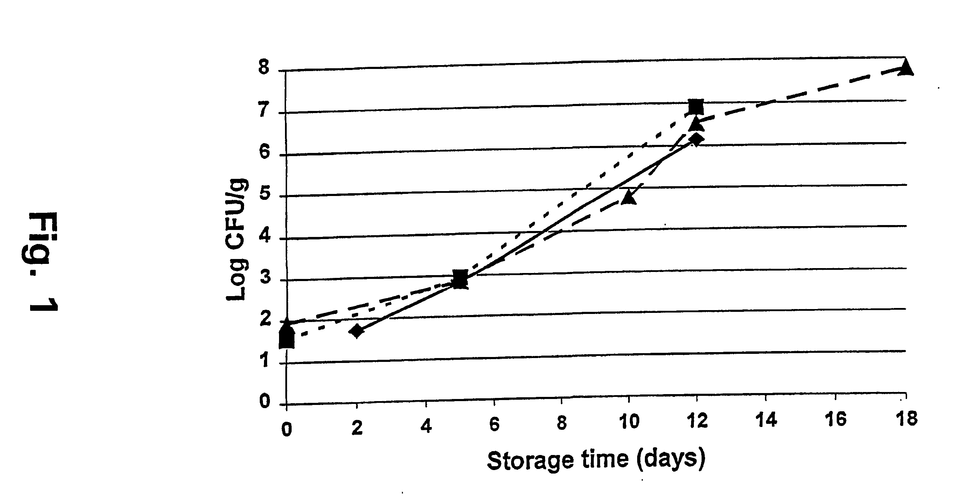

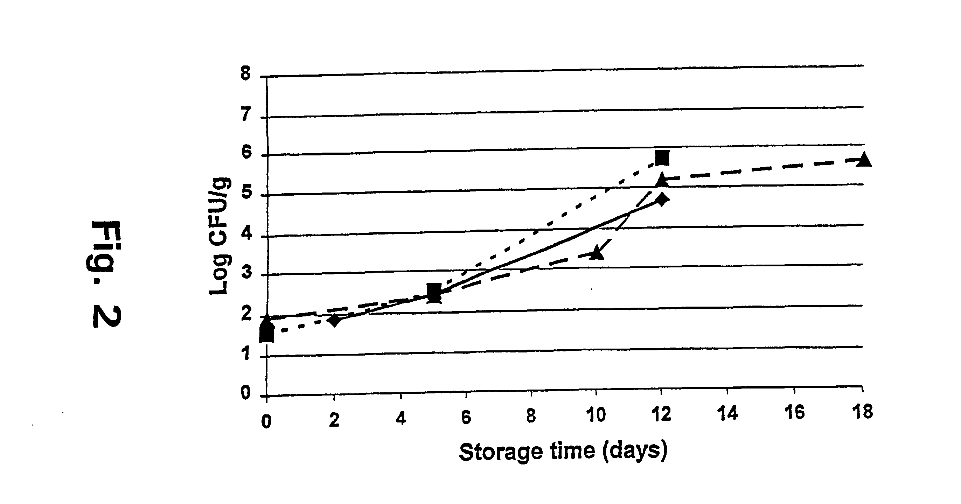

The results showed that TVC developed almost similar on pre-, in- and post-rigor fillet pieces when the time between slaughtering and filleting was excluded (Fig. 1 and 2). After 12 days of storage the numbers of bacteria were about 1 log-unit higher on fillets in air as compared to fillets in vacuum. Pre-rigor fillets had at this time slightly lower bacterial numbers than in- and post-rigor fillets. Based on these unexpected results it was decided to examine the microbiological development in experiment 2. In this experiment the common spoilage bacteria of salmon were investigated.

### Experiment 2, TVC, H₂S-producing bacteria and psychrothrophic bacteria

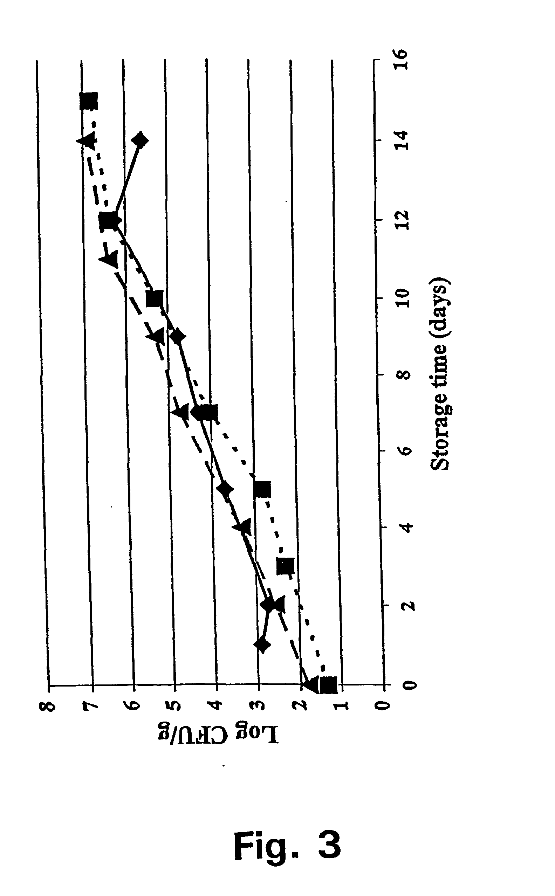

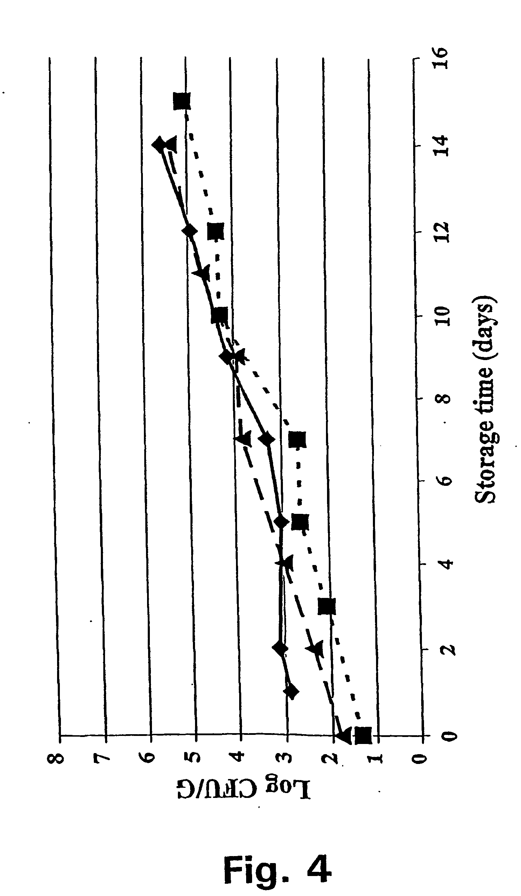

The numbers of bacteria in pre-rigor fillets were initially higher, about 1 to 2 log units, than in-rigor and post-rigor fillets (Fig. 3 and 4, 5 and 6 and 7 and 8). This result was observed for both TVC, psychrotrophic bacteria and H₂S-producing bacteria. The initial number of TVC was low, < 10³ CFU/g, for pre-, in- and post-rigor. No lag time was observed for in- and post rigor fillets, while pre- rigor fillets had a lag time of 2 days in air (Fig. 3) and 5 days in vacuum (Fig. 4) before exponential growth (Fig. 3 and 4).

After 14 days of storage the numbers of TVC were 10⁶ - 10⁷ CFU/g in air (Fig. 3) and 10⁵ - 10⁶ CFU/g in vacuum (Fig 4). No stationary phases were observed during 14 days of storage. The growth rates in vacuum packaged fillets were lower as compared to fillets in air. Small variations in growth rates were observed between pre-, in- and post-rigor fillets (Fig. 3 and 4).

### H₂S-producing bacteria

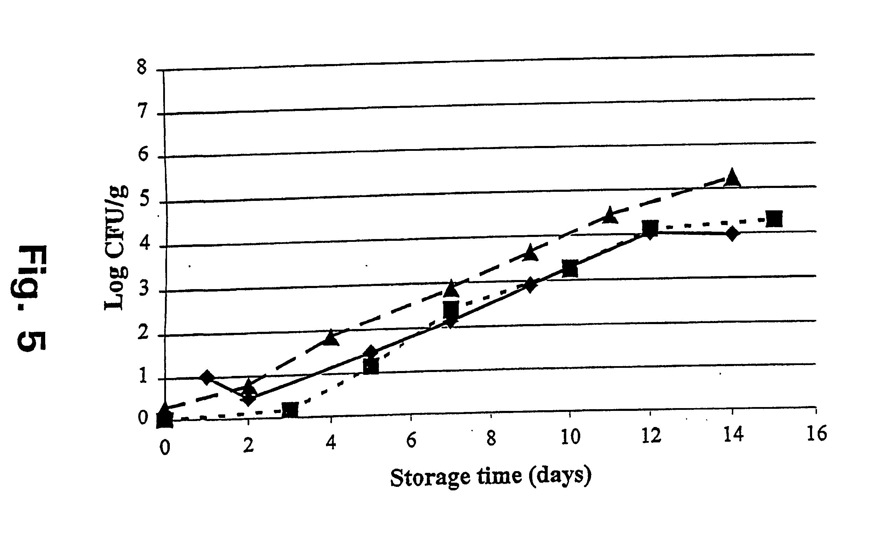

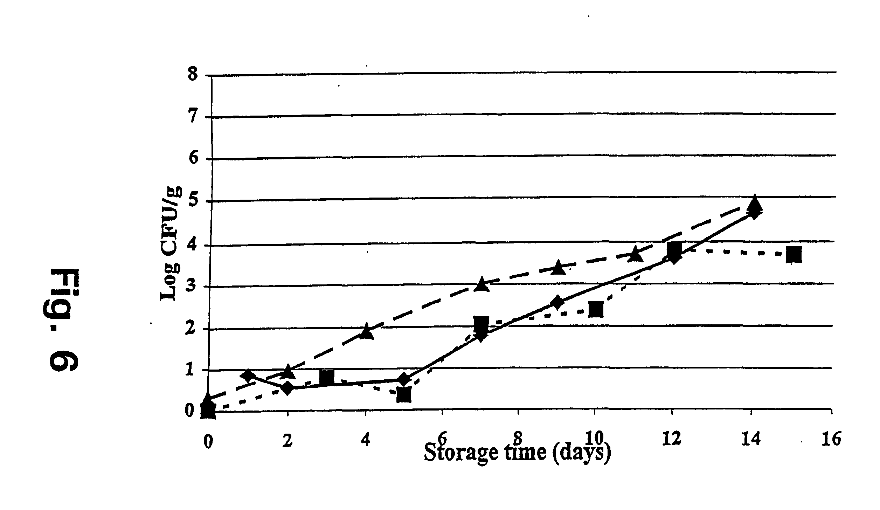

The number of H₂S-producing bacteria was initially low varying from 0 (in-rigor) to 10 (pre-rigor) H₂S-producing bacteria/g (Fig. 5 and 6). No lag phase was observed in post-rigor fillets while lag phases of 2 to 3 days were observed in in-rigor and pre-rigor fillets (Fig. 5) and 5 days for in- and pre-rigor fillets (Fig. 6). Only small differences in growth rates were observed between pre-, in- and post-rigor fillets.

After 14 days of storage the highest numbers of H₂S-producing bacteria were found in post-rigor fillets. The final numbers of H₂S-producing bacteria were within the same order of magnitude in fillets stored in air and in vacuum.

### Psychrothropic-bacteria

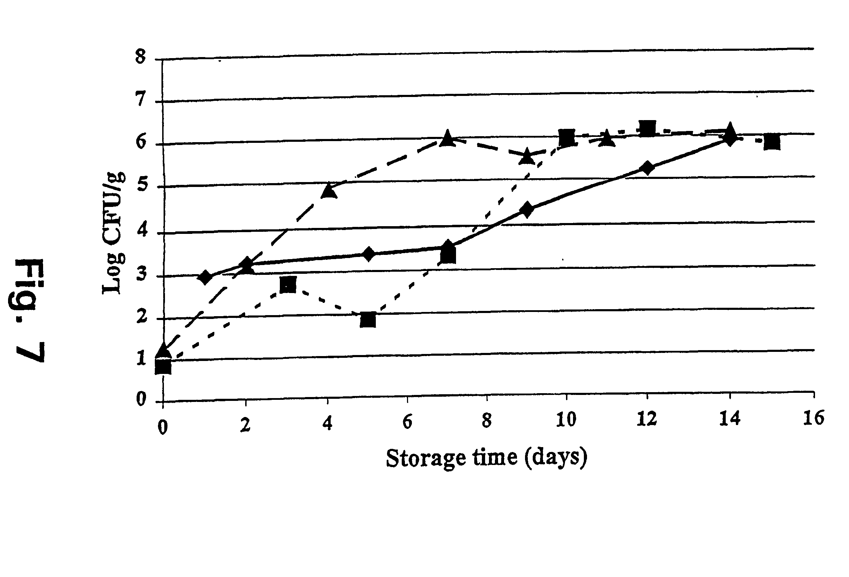

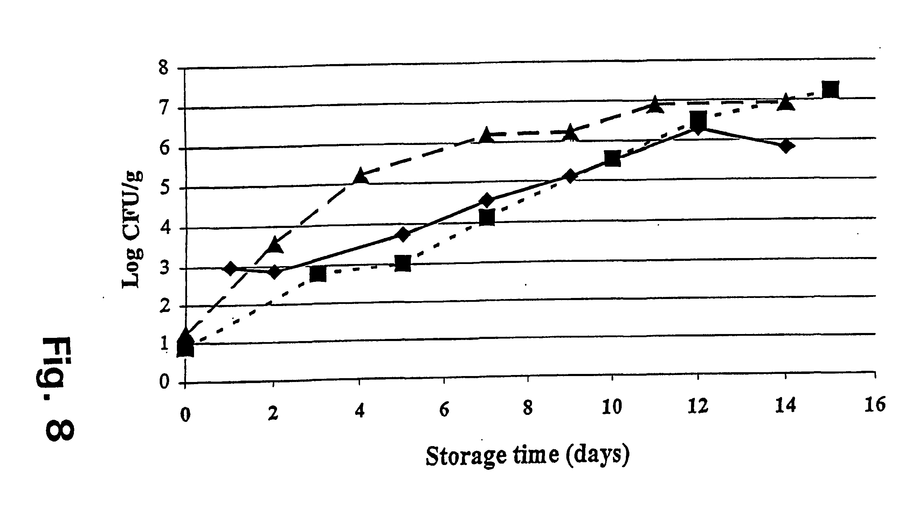

The initial numbers of psychrothropic bacteria were almost identical to the numbers of TVC (Fig. 3 and 4 and Fig. 7 and 8). Psychrothropic bacteria in in- and post-rigor fillets had no lag phase while lag phases of 2 days in air (Fig. 7) and 6 to 7 days i vacuum (Fig. 8) were observed on pre-rigor fillets. Psychrothropic bacteria in post-rigor fillets had a higher growth rate as compared to in- and pre- rigor fillets. The numbers of psychrothropic bacteria in post rigor fillets were 10⁶ CFU/g after 6 days (air) and 7 days (vac.). For in rigor fillets a number of 10⁶ CFU/g was observed after 11 days in air and in vacuum (Fig 7 and 8) while for pre rigor fillets 10⁶ CFU/g was reached after 11 days (air) and 14 days (vac.).

### Conclusion

These results were unexpected and showed that pre-rigor fillets had similar or better microbiological quality than in- and post-rigor fillets. After 12 days of storage, pre-rigor fillets pieces stored in air had bacterial numbers (TVC) between 10⁶ and 10⁷ CFU/g while salmon in vacuum were about 1 log unit lower. This was highly surprising as it was assumed that bacteria on pre-rigor fillet pieces would cause more microbiological spoilage due to early exposure of the salmon meat to the surrounding environment. A striking difference in microbial growth pattem between pre-rigor and post-rigor fillets was that bacteria on pre-rigor fillets from experiment 2 had a lag phase before the exponential growth. Development of psychrothropic bacteria was much slower in pre-rigor fillets due to the lag phase and lower growth rate.

### EXAMPLE 3

### ODOUR ANALYSES OF CONVENTIONAL FISH PRODUCTS (POST-RIGOR) COMPARED TO IN-RIGOR AND PRE-RIGOR FILETS

Four raw salmon fillets obtained as described in Example 2, experiment 2 stored in vacuum and in air, respectively were evaluated using a quality scale from 10 to 2 adopted from (Shewan et al. 1953). Two trained panelists were presented with two packages from each treatment and asked to evaluate the acceptability with respect to odour. As a reference sample, the panelists were also presented with a freshly-thawed sample of salmon.

Samples of salmon were laid out on an inspection bench and allowed to warm up to room temperature. The nature of the odour was recorded and unusual odours were noted. On the scale, 10 was considered as best (no off-odours or off flavours, possible loss of odour/flavour or off flavours), 6-7 as acceptable (light off-odours/off-flavours and possibly texture changes, but still acceptable) and ≤ 5 as non-acceptable (strong off-odour and off-flavours, texture changes).

The maximum shelf-life for a treatment was defined as the first sampling day, where the mean of two analysed packages was rejected with respect to odour.

### Results

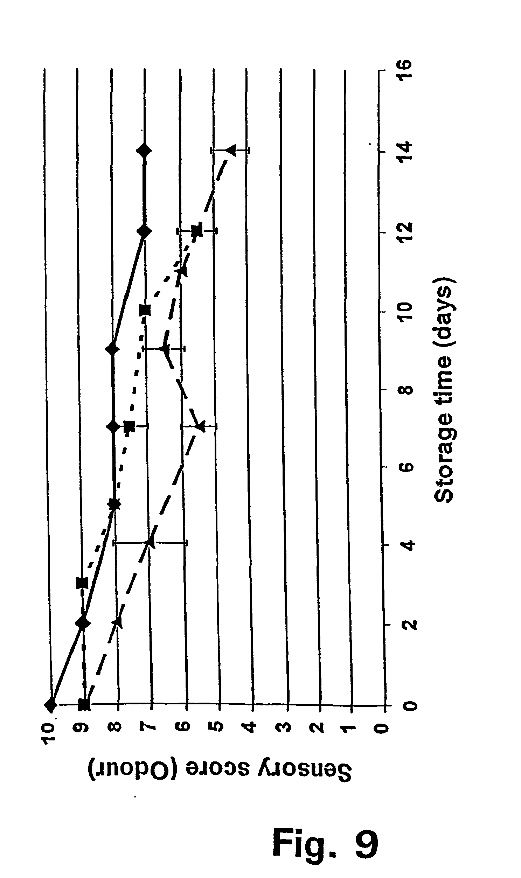

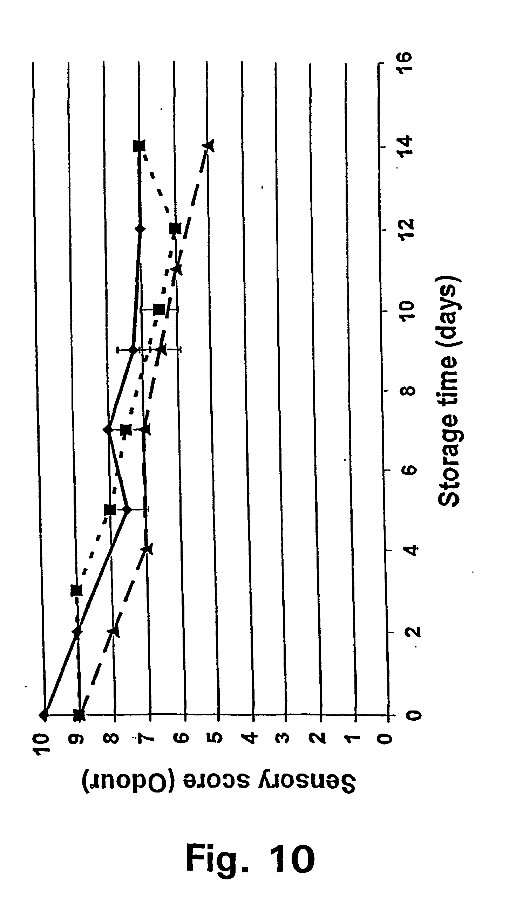

The results showed that the pre-rigor fillets were sea-fresh and had a natural colour during the first 2 days of storage (Fig. 9 and 10). After 7 days of storage the odour was sea-fresh to neutral (vac./air). The first off odour (cucumber) was detected on fillets after 7 days of storage in vacuum (Fig. 9) and 9 days in air (Fig. 10). Scarcely detectable fish odour was detected at day 12 (vac./air) and after 14 days of storage, a fish odour was easily detected and characterised as slightly musty (vac./air).

The in-rigor fillets were sea-fresh to neutral after 3 days of storage (vac./air) and neutral after 5 days (vac./air). After 10 days of storage, vacuum packaged in-rigor fillets had an easily detectable fish odour which was slightly sourish (vac.). After 14 days of storage both vacuum packaged and air stored in-rigor salmon fillets had a strong smell of cucumber and acid.

The post-rigor fillets had a neutral odour after 2 days of storage and a smell of cucumber appeared at day 4 (vac.) and 7 (air). After 9 days of storage both vacuum packaged and air stored fillets had an easily detectable fish odour which was slightly sourish (vac.) and musty (air).

### Conclusion

Non of the pre-rigor fillets were rejected by the members of the sensory panel indicating a shelf-life of 14 days. In-rigor fillets were rejected after 10-12 days and post-rigor after 7-10 days.

### EXAMPLE 4

### TEXTURE ANALYSES OF CONVENTIONAL FISH PRODUCTS (POST-RIGOR) COMPARED TO IN-RIGOR AND PRE-RIGOR FILETS

In order to evaluate the texture of the fish meat fillets obtained as described in Example 2, experiment 2, trained panellists pushed their thumb into the fish muscle and the degree of firmness was evaluated as a combination of the hardness when pressed on the fillet and the mark on the filet after pressing.

The texture was evaluated on a scale from 1-3, where 1 was considered as fresh with no marks after the finger test, 2 as the borderline (small marks were observed, and 3 as soft unacceptable fish muscle. The results as described are mean values of two samples from vacuum packaged salmon and two packages of salmon in air.

### Results

The results showed that the pre-rigor fillets had a hard and firm texture (score 1) during a storage of 9 days (vac./air) with no marks from the finger test. Measurements after 12 and 14 days of storage gave small marks (score 2) (vac./air).

In-rigor fillets had a firm texture during 5 days (vac./air) (score 1) and had a soft texture (score 2) on day 7 which lasted to day 14 (vac./air) of the storage period.

Post-rigor fillets had a firm texture (score 1) after 4 days of storage and score 2 during the rest of the storage time of 14 days. None of the fillets were rejected as having an unacceptable texture during 14 days of storage.

### Conclusion

None of the fillets were rejected during the period of 14 days of storage. However, the pre-rigor and in-rigor fillets had improved texture scores as compared to the post-rigor product, thus indicating that the producers can obtain more time for transport and distribution when pre-rigor or in-rigor filleting is used as compared to the traditional post-rigor filleting.

### EXAMPLE 5

### GAPING ANALYSES OF CONVENTIONAL FISH PRODUCTS (POST-RIGOR) COMPARED TO IN-RIGOR AND PRE-RIGOR FILETS

Gaping is the process where a fillet separates into its muscle blocks. Fillet gaping frequency was measured using fillets obtained as described in Example 2, experiment 2 and evaluated according to a scale of gaping severity (Andersen et al. 1994) where score 0 is no gaping and score 5 is extreme gaping with the fillet falling apart. The results are presented as mean values of four fillets for each sampling point.

### Results

As illustrated in Table 3, pre-rigor fillets showed no gaping during the first 7 days of storage, but gaping increased from day 7 to day 14.

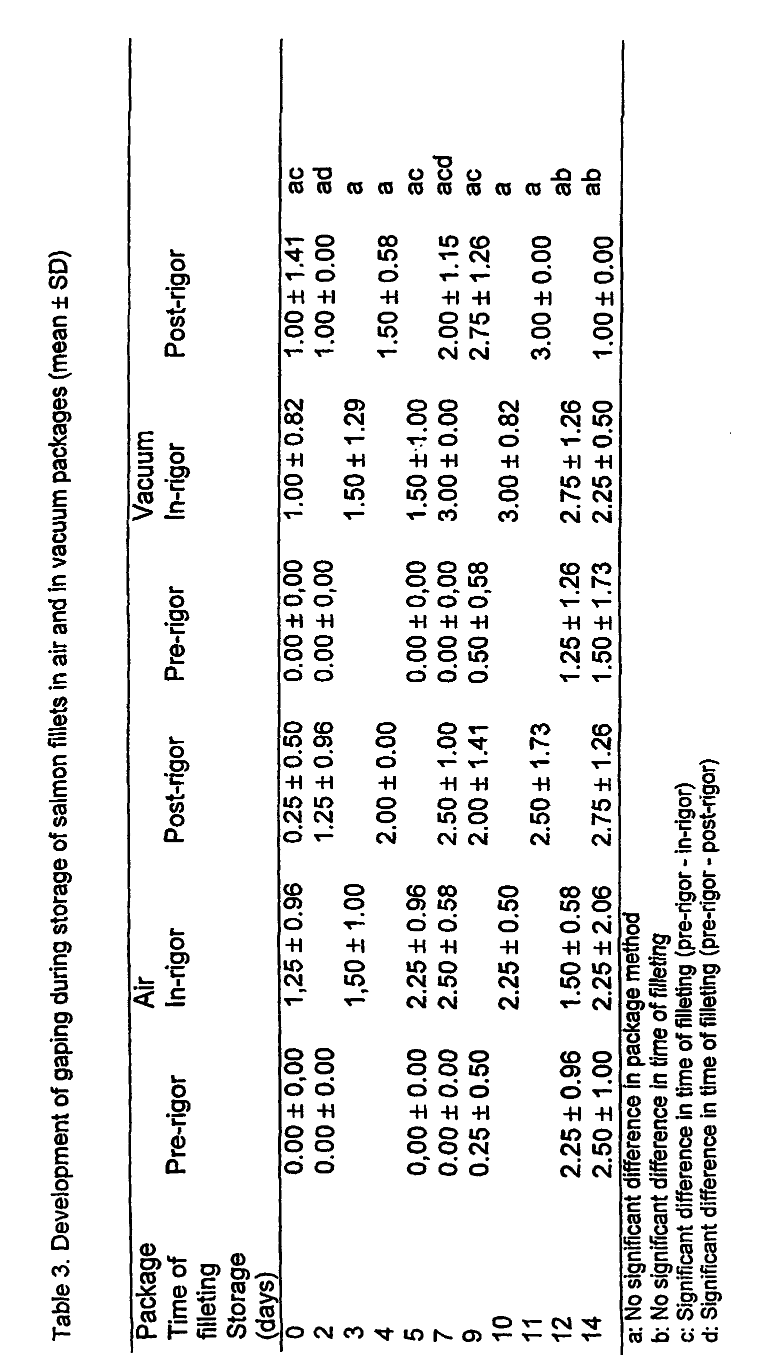

For in- and post-rigor fillets, gaping occurred from the first day of storage. There were no significant differences in the packaging method at any time during the storage period. At day 0, 5, 7 and 9 there were significant differences between pre-rigor and in-rigor fillets with respect to the filleting time. Also at day 7 there was a significant difference in the time of filleting between pre-rigor and in post-rigor fillets. At 12 and 14 days of storage there were no significant difference with respect to the filleting time.

### Conclusion

A fillet having an extreme gaping, e.g. resulting in the fillet falling apart is difficult to process and unlikely to be sold. The above results illustrate that this situation can be avoided by using pre-rigor fish meat. The reason why pre-rigor fish meat has such a dramatic decrease in gaping is explained by the fact that muscles which are detached from the bone structure by pre-rigor filleting can contract freely, and hence the build up of tension in the muscle which normally results in gaping is avoided.

In conclusion, the above examples (Examples 2, 3,4 and 5) illustrate that fish meat obtained before the resolution of rigor showed improved microbiological, textural, gaping and sensorial properties, as compared to traditional post-rigor fish meat products.

It was expected that fish meat obtained before the resolution of rigor would have an increased bacterial growth due to early exposure of the fish muscle to the non-sterile surrounding environment as a result of the early filleting. However, it was surprisingly found that such a fish meat product obtained before the resolution of rigor was significantly improved with respect to the microbiological quality. Thus the pre- and in-rigor products has an improved shelf-life which will give the producers a longer time for distribution to more distant areas and still offer a high quality fish meat product.

### EXAMPLE 6

### GAPING PROPERTIES OF SALMON FLESH FROM DIFFERENT LOCATIONS ON PRE- AND POST-RIGOR FILLETS.

The experiment was carried out at a commercial salmon processing plant in Norway. All fish in the experiment were randomly selected from the same group of 2000 fish kept in 250 m3 net-pen. A total of 32 Atlantic salmon (Salmo salar) with a mean weight of 5.1±0.58 kg were live-chilled (Skjervold et al., 1996) from a seawater temperature of 12°C to a core temperature below 2°C by keeping the fish for 45 min in a chilling tank at a temperature of 1°C prior to harvest. Slaughter procedure was anaesthesia by CO₂, gill cut, and storage in a bleeding tank at 1.5°C for 60 minutes, after which the fish were individually marked, gutted and washed.

### Filleting and portioning of the fish

Two groups, each of 16 fish, were either filleted post-rigor, 5 days after slaughter, or pre-rigor only two hours after slaughter. To be able to conduct measurements simultaneously, the post-rigor group was slaughtered 5 days prior to the pre-rigor group. Between gutting and filleting, the post-rigor group was stored on ice in boxes in a refrigerated chamber at a temperature of 0-2°C. All 32 fish were filleted by a filleting machine (Baader 200, Lübeck, Germany). Immediately after filleting each fillet was manually trimmed, skinned by a de-skinner (Trio 2000, Stavanger, Norway), manually boned and cut into two longitudinal loins, splitting each fillet along the line of pin-bones. All loins were individually labelled. After filleting, the loins were packed individually in plastic bags, and stored on ice in styrofoam boxes which were kept in a refrigerated room at a temperature of 0-2°C.

Within each of the two main groups (post- and pre-rigor), loins were divided in four sub groups: (upper right, upper left, lower right, lower left). Measurements were randomised between the four loin sub groups. Measurements were then repeated on the same sample throughout the experiment. Therefore, the data is expressed both as average for all regions of 16 fish (8 upper + 8 lower loins) and expressed as the specific region measured. When presented, the 8 regions are reduced to 4, since data from left and right sides are pooled. Therefore, the average of 8 measures is presented for upper, lower, anterior, and caudal positions.

The quality parameters texture, muscle contraction, gaping, colour characteristics and chemical composition were all found to be improved in the pre-rigor group as compared to the post-rigor loins. Furthermore, it was shown that it was possible to develop specific loin cuts from salmon fillets with improved texture, reduced frequency of gaping and with enhanced colour. However, the most striking effect of different cuts was found in the gaping analysis and the results are presented below.

### Gaping

Fillet gaping severity was evaluated according to a scale of 0 to 5 where score 0 is no gaping and score 5 is extreme gaping with the fillet falling apart. Gaping was evaluated on whole loins.

**Table 4.**

| Evaluation of muscle gaping score (1-5), in 16 pre-rigor and 16 post-rigor filleted Atlantic salmon. | | | | | |
|---|---|---|---|---|---|
| | | Average for all regions | Loin | | Anova |
| | | | Upper | Lower | Pₗₒᵢₙ |
| Day 0 | Post-rigor | 1.8 ±0.23* | 1.8 ±0.41* | 1.8 ±0.25* | >0.99 |
| | Pre-rigor | 0.0 ±0.00* | 0.0 ±0.00* | 0.0 ±0.00* | >0.99 |
| | | | | | |
| Day 6 | Post-rigor | 2.4 ±0.33* | 2.0 ±0.53* | 2.8 ±0.37 | 0.25 |
| | Pre-rigor | 1.4 ±0.30* | 0.5 ±0.33* | 2.3 ±0.25 | <0.01 |
| | | | | | |
| Day 15 | Post-rigor | 2.6 ±0.33 | 2.0 ±0.53 | 3.3 ±0.25 | 0.07 |
| | Pre-rigor | 1.8 ±0.32 | 0.9 ±0.40 | 2.8 ±0.16 | <0.01 |
| The data represent means and s.e.m. | | | | | |

| | | | | | |
|---|---|---|---|---|---|
| * = Significant difference (P < 0.05) between the post-rigor and pre-rigor groups within the same day. Pₗₒᵢₙ = Upper versus Lower loins. Average for all regions n = 16, Upper n = 8, Lower n = 8. Day 0, 6 and 15 represent days after filleting. For pre-rigor fish this equals days after slaughter, for post-rigor this represents 5, 11 and 20 days after slaughter. | | | | | |

As illustrated in table 4 gaping differences between loins were strikingly more pronounced in the pre-rigor filleted group. In this study fillets were removed from bone structure at approximately 2h post-mortem and the 4 types of loins evaluated. Gaping was significantly reduced in upper loins compared to lower, despite no clear difference in composition. These differences in gaping were evident also after storage up to 15 days. As demonstrated major textural changes occur during the first 5 days after slaughter, therefore rapid processing is needed in order to produce high texture quality products. Time not only reduces quality, but also the potential for differentiated quality cuts. The selection of loins for quality requires that the fillets are removed pre-rigor.

### REFERENCES

Berg,T., Erikson,U., and Nordtvedt, T.S. 1997. Rigor mortis assessment of Atlantic salmon (Salmo salar) and effects of stress. J. Food. Sci. 62:439-446.

Boyd,R.S., Wilson,N.D., Jarrett,A.R., and Hall,B.I. 1984. Effects of brain destruction on post harvest muscle metabolism in the fish kahawai (Arripis trutta). Int.J.Food Technol. 49:177-179.

Jerrett,A.R., Stevens,J., and Holland,A.J. 1996. Tensile properties of white muscle in rested and exhausted chinook salmon (Oncorhychus tshawytscha). J. Food Sci. 61: 527-532.

Korhonen,R.W., Lanier,T.C., and Giesbrecht,F. 1990. An evaluation of simple methods for following rigor development in fish. J. Food Sci. 55:346-348.

Shewan,J.M., Macintosh,R.G., Tucker,C.G., and Ehrenberg,A.S.C. 1953. The development of a numerical scoring system for the sensory assassment of the spoilage of wet white fish stored in ice. J.Sci. Food Agric. 4:283-298.

Skjervold,P.O., Fjæra, S.O., and Christoffersen, K. 1996. Pre-mortal chilling of farmed salmon (Salmo salar). Conference proceeding, Refrigeration and Aquaculture, International Institute of Refrigiration, Commission C2 Meeting bordeux, March 20-22 edn. 1676 p. Paris France: International Institute of Refrigeration.

Skjervold,P.O., Fjæra,S.O., and Østby,P.B. 1999. Rigor in salmon as affected by crowding stress prior to chilling before slaughter. Aquaculture. 175:93-101.

Whittle,K.J. 1996. Factors affecting the quality of farmed salmon (Salmo salar). 96 A.D. 175 p. Paris, France: International Institute of Refrigeration, Commission C2 Meeting, Bordeaux.

## Claims

1. A method of preparing a raw fish meat product comprising the steps of i) providing a fish, ii) at least partially separating fish meat parts from the main skeletal parts of said fish and iii) substantially removing pin-bones from said fish meat parts pre rigor, to obtain the raw fish meat product.

2. A method according to claim 1 wherein the provided fish belongs to *Salmonidae*, including *Salmo salar*.

3. A method according to claim 1 wherein the provided fish is kept under conditions that delay the onset of rigor.

4. A method according to claim 3 wherein the provided fish is kept at a temperature below about 5°C.

5. A method according to claim 1 wherein the raw fish meat parts are excised so that substantially all pin-bones are located near the rind of at least one part of the fish meat whereby conventional methods of removing pin-bones can be used.

6. A method according to claim 1 comprising as a further step preserving the fish meat product including smoking, salting, brining, canning, cooking and freezing, and any combination thereof.

7. A raw fish meat product obtainable by the method according to any of claims 1-6 comprising substantially boned fish meat wherein pin-bones have been substantially removed pre rigor.

8. A raw fish meat product according to claim 7 wherein the fish meat is skinned.

9. A raw fish meat product according to claim 7 wherein the fish meat are fillets.

10. A raw fish meat product according to claim 7 wherein the fish meat are loins.

11. A raw fish meat product according to claim 7 wherein raw fish meat parts are excised so that substantially all pin-bones are located near the rind of at least one part of the fish meat before removal of the pin-bones whereby conventional methods of removing pin-bones can be used.

12. A raw fish meat product according to claim 7 prepared as a "ready to eat" meal.

13. A raw fish meat product according to claim 7 which is in a frozen state.

14. A raw fish meat product according to claim 7 which is of "ikarimi" quality.

15. A raw fish meat product according to claim 7 which is prepared as a "Japanese sushi dish".

16. A method of combining raw fish meat parts comprising i) providing a fish, ii) at least partially separating fish meat parts from the main skeletal parts of said fish, iii) substantially removing pin-bones from said raw fish meat parts pre rigor and iv) combining the raw fish meat parts by a bonding agent to obtain a composite raw fish meat product.

17. A method according to claim 16 wherein the bonding agent is derived from a natural source.

18. A method according to claim 16 wherein the bonding agent comprises fibrinogen and a substance that can effect conversion of the fibrinogen into fibrin.

19. A method according to any of claims 17 or 18 wherein the bonding agent is derived from fish.

20. A method according to claim 16 further comprising the step of shaping the composite fish meat product into a predetermined shape.

21. A method according to claim 16 wherein the bonding agent further comprises a vegetable or animal material.

22. A method according to claim 16 wherein the raw fish meat parts to be bonded are derived from two or more different fish species.

23. A method according to claim 16 wherein the raw fish meat parts to be bonded further comprises an animal material or a plant material.

24. A method according to claim 18 wherein the raw fish meat parts to be bonded are preserved by a method selected from the group consisting of smoking, salting, brining, canning, cooking, and any combination thereof.

25. A raw composite fish meat product obtainable by a method according to any of claims 16-24 comprising substantially boned fish meat parts wherein pin-bones have been removed pre rigor and, said fish parts are combined with a bonding agent to obtain the raw composite fish meat product.

26. A raw composite fish meat product according to claim 25 prepared as a "ready to eat" meal.

27. A raw composite fish meat product according to claim 25 which is in a frozen state.

28. A raw composite fish meat product according to claim 25 which is of "lkarimi", quality.

29. A raw composite fish meat product according to claim 25 which is prepared as a "Japanese sushi dish".

30. A processed fish meat product obtained by processing a product according to any of claims 7-15 or processing a composite product according to any of claims 25-29.

## Patentansprüche

1. Verfahren zum Bereiten eines rohen Fischfleischprodukts, umfassend die Schritte
(i) Bereitstellen eines Fisches;
(ii) zumindest teilweises Abtrennen von Fischfleischteilen von den Hauptskelettteilen des Fisches; und
(iii) im Wesentlichen Entfemen der Gräten aus den Fischfleischteilen vor dem Eintreten der Totenstarre (pre rigor), um das rohe Fischfleischprodukt zu erhalten.

2. Verfahren nach Anspruch 1, wobei der bereitgestellte Fisch zu den *Salmonidae*, einschließlich *Salmo salar*, gehört.

3. Verfahren nach Anspruch 1, wobei der bereitgestellte Fisch unter Bedingungen gelagert wird, die das Eintreten der Totenstarre verzögern.

4. Verfahren nach Anspruch 3, wobei der bereitgestellte Fisch bei einer Temperatur unter etwa 5 °C gelagert wird.

5. Verfahren nach Anspruch 1, wobei die rohen Fischfleischteile so herausgeschnitten werden, dass im Wesentlichen alle Gräten nahe der Haut von zumindest einem Teil des Fischfleisches gelegen sind, wobei herkömmliche Verfahren zum Entfernen der Gräten verwendet werden können.

6. Verfahren nach Anspruch 1, umfassend als weiteren Schritt das Konservieren des Fischfleischprodukts, wobei das Konservieren Räuchern, Einsalzen, Pökeln, in Büchsen einlegen, Kochen und Gefrieren und jede Kombination hiervon, einschließt.

7. Rohes Fischfleischprodukt erhältlich nach dem Verfahren gemäß einem der Ansprüche 1 bis 6, umfassend im Wesentlichen entgrätetes Fischfleisch, wobei Gräten im Wesentlichen vor dem Eintreten der Totenstarre (pre rigor) entfernt wurden.

8. Rohes Fischfleischprodukt nach Anspruch 7, wobei das Fischfleisch gehäutet ist.

9. Rohes Fischfleischprodukt nach Anspruch 7, wobei das Fischfleisch als Filets vorliegt.

10. Rohes Fischfleischprodukt nach Anspruch 7, wobei das Fischfleisch Rippenstücke sind.

11. Rohes Fischfleischprodukt nach Anspruch 7, wobei rohe Fischfleischteile so herausgeschnitten sind, dass vor der Entfernung der Gräten im Wesentlichen alle Gräten nahe der Haut von zumindest einem Teil des Fischfleisches gelegen sind, wobei herkömmliche Methoden zum Entfemen der Gräten verwendet werden können.

12. Rohes Fischfleischprodukt nach Anspruch 7, das als essfertige Mahlzeit zubereitet ist.

13. Rohes Fischfleischprodukt nach Anspruch 7, das in einem gefrorenen Zustand ist.

14. Rohes Fischfleischprodukt nach Anspruch 7, das von "Ikarimi"-Qualität ist.

15. Rohes Fischfleischprodukt nach Anspruch 7, das als japanisches Sushigericht zubereitet ist.

16. Verfahren zum Kombinieren roher Fischfleischteile, umfassend
(i) Bereitstellen von Fisch;
(ii) zumindest teilweises Abtrennen von Fischfleischteilen von den Hauptskelettteilen des Fisches;
(iii) im Wesentlichen Entfernen von Gräten von den rohen Fischfleischteilen vor dem Eintreten der Totenstarre (pre rigor); und
(iv) Kombinieren der rohen Fischfleischteile mit einem Bindemittel, um ein zusammengesetztes rohes Fischfleischprodukt zu erhalten.

17. Verfahren nach Anspruch 16, wobei das Bindemittel aus einer natürlichen Quelle gewonnen ist.

18. Verfahren nach Anspruch 16, wobei das Bindemittel Fibrinogen und eine Substanz, die die Umwandlung von Fibrinogen in Fibrin bewirken kann, umfasst.

19. Verfahren nach einem der Ansprüche 17 oder 18, wobei das Bindemittel aus Fisch gewonnen ist.

20. Verfahren nach Anspruch 16, des weiteren umfassend den Schritt des Formens des zusammengesetzten Fischfleischprodukts in eine vorgegebene Form.

21. Verfahren nach Anspruch 16, wobei das Bindemittel des weiteren ein pflanzliches oder tierisches Material umfasst.

22. Verfahren nach Anspruch 16, wobei die zu verbindenden rohen Fischfleischteile aus zwei oder mehreren verschiedenen Fischarten gewonnen sind.

23. Verfahren nach Anspruch 16, wobei die zu verbindenden rohen Fischfleischteile des weiteren tierisches oder pflanzliches Material umfassen.

24. Verfahren nach Anspruch 18, wobei die zu verbindenden rohen Fischfleischteile konserviert sind mit einem Verfahren ausgewählt aus der Gruppe bestehend aus Räuchern, Einsalzen, Pökeln, in Büchsen einlegen, Kochen und jeder Kombination hiervon.

25. Rohes zusammengesetztes Fischfleischprodukt erhältlich mit einem Verfahren nach einem der Ansprüche 16 bis 24, umfassend im wesentlichen entgrätete Fischfleischteile, wobei die Gräten vor dem Eintreten der Totenstarre (pre rigor) entfernt wurden und die Fischteile mit einem Bindemittel kombiniert sind, um das rohe zusammengesetzte Fischfleischprodukt zu erhalten.

26. Rohes zusammengesetztes Fischfleischprodukt nach Anspruch 25, das als essfertige Mahlzeit zubereitet ist.

27. Rohes zusammengesetztes Fischfleischprodukt nach Anspruch 25, das in einem gefroren Zustand ist.

28. Rohes zusammengesetztes Fischfleischprodukt nach Anspruch 25, das von "Ikarimi"-Qualität ist.

29. Rohes Zusammengesetztes Fischfleischprodukt nach Anspruch 25, das als japanisches Sushigericht zubereitet ist.

30. Aufbereitetes Fischfleischprodukt, das erhalten wurde durch Aufbereiten eines Produkts nach einem der Ansprüche 7 bis 15 oder durch Aufbereiten eines zusammengesetzten Produkts nach einem der Ansprüche 25 bis 29.

## Revendications

1. Procédé de préparation d'un produit à base de chair de poisson crue comprenant les étapes consistant à i) se munir d'un poisson, ii) détacher, au moins partiellement, des morceaux de chair, des principaux éléments du squelette dudit poisson et iii) éliminer l'essentiel des arêtes desdits morceaux de chair de poisson *pre-rigor*, pour obtenir le produit à base de chair de poisson crue.

2. Procédé selon la revendication 1, dans lequel le poisson est un salmonidé, par exemple *Salmo salar*.

3. Procédé selon la revendication 1, dans lequel le poisson est conservé dans des conditions retardant l'apparition de la rigor.

4. Procédé selon la revendication 3, dans lequel le poisson est conservé à une température inférieure à environ 5°C.

5. Procédé selon la revendication 1, dans lequel les morceaux de chair de poisson crue sont découpés de façon à ce que l'essentiel des arêtes soient situées près de la peau d'au moins une partie de la chair du poisson, moyennant quoi on peut utiliser des procédés traditionnels pour éliminer les arêtes.

6. Procédé selon la revendication 1 comprenant une étape supplémentaire consistant à assurer la conservation du produit à base de chair de poisson par fumage, salage, saumurage, mise en conserve, cuisson et congélation, de même que par toute combinaison de ces divers procédés.

7. Produit à base de chair de poisson crue, susceptible d'être obtenu par le procédé selon l'une quelconque des revendications 1 à 6, comprenant de la chair de poisson pratiquement exempte d'arêtes dans laquelle l'essentiel des arêtes ont été éliminées pre-rigor.

8. Produit à base de chair de poisson crue selon la revendication 7, dans lequel la chair de poisson a été débarrassée de sa peau.

9. Produit à base de chair de poisson crue selon la revendication 7, dans lequel la chair de poisson se présente sous la forme de filets.

10. Produit à base de chair de poisson crue selon la revendication 7, dans lequel la chair de poisson se présente sous la forme de longes.

11. Produit à base de chair de poisson crue selon la revendication 7, dans lequel les morceaux de chair de poisson crue sont découpés de façon à ce que l'essentiel des arêtes soient situées près de la peau d'au moins une partie de la chair du poisson avant élimination des arêtes, moyennant quoi on peut utiliser des procédés traditionnels pour éliminer les arêtes.

12. Produit à base de chair de poisson crue selon la revendication 7, se présentant sous la forme d'un produit "prêt à consommer".

13. Produit à base de chair de poisson crue selon la revendication 7, se présentant à l'état congelé.

14. Produit à base de chair de poisson crue selon la revendication 7, de qualité "ikarimi".

15. Produit à base de chair de poisson crue selon la revendication 7, se présentant sous la forme d'un produit "de type sushi japonais".

16. Procédé d'assemblage de morceaux de chair de poisson crue comprenant i) la mise à disposition d'un poisson, ii) le fait de détacher, au moins partiellement, des morceaux de chair de poisson des principaux éléments du squelette dudit poisson, iii) l'élimination de l'essentiel des arêtes desdits morceaux de chair de poisson pre-rigor et iv) l'assemblage des morceaux de chair de poisson crue au moyen d'un agent liant pour obtenir un produit d'assemblage à base de chair de poisson crue.

17. Procédé selon la revendication 16, dans lequel l'agent liant est d'origine naturelle.

18. Procédé selon la revendication 16, dans lequel l'agent liant comprend du fibrinogène et une substance capable d'opérer la conversion du fibrinogène en fibrine.

19. Procédé selon l'une quelconque des revendications 17 ou 18, dans lequel l'agent liant dérive des poissons.

20. Procédé selon la revendication 16 comprenant, en outre, une étape consistant à donner au produit d'assemblage à base de chair de poisson une forme prédéterminée.

21. Procédé selon la revendication 16, dans lequel l'agent liant comprend, en outre, un produit d'origine végétale ou animale.

22. Procédé selon la revendication 16, dans lequel les morceaux de chair de poisson crue devant être assemblés proviennent de deux espèces de poisson différentes ou plus.

23. Procédé selon la revendication 16, dans lequel les morceaux de chair de poisson crue devant être assemblés comprennent, en outre, un produit d'origine animale ou un produit d'origine végétale.

24. Procédé selon la revendication 18, dans lequel on assure la conservation des morceaux de chair de poisson crue devant être assemblés par un procédé choisi parmi le fumage, le salage, le saumurage, la mise en conserve, la cuisson et toute combinaison desdits procédés.

25. Produit d'assemblage à base de chair de poisson crue susceptible d'être obtenu par un procédé selon l'une quelconque des revendications 16 à 24, comprenant des morceaux de chair de poisson essentiellement exempts d'arêtes dans lesquels les arêtes ont été éliminées pre-rigor et lesdits morceaux de poisson sont assemblés au moyen d'un agent liant pour obtenir un produit d'assemblage à base de chair de poisson crue.

26. Produit d'assemblage à base de chair de poisson crue selon la revendication 25, se présentant sous la forme d'un produit "prêt à consommer".

27. Produit d'assemblage à base de chair de poisson crue selon la revendication 25, se présentant à l'état congelé.

28. Produit d'assemblage à base de chair de poisson crue selon la revendication 25, de qualité "ikarimi".

29. Produit d'assemblage à base de chair de poisson crue selon la revendication 25, se présentant sous la forme d'un produit "de type sushi japonais".

30. Produit transformé à base de chair de poisson obtenu par transformation d'un produit selon l'une quelconque des revendications 7 à 15 ou par transformation d'un produit d'assemblage selon l'une quelconque des revendications 25 à 29.
